# EUROPEAN PATENT APPLICATION

(11) **EP 4 813 687 A1**
(43) Date of publication of application: **30.09.2026**
(21) Application number: 26152531.5
(22) Date of filing: 19.01.2026
(51) Int. Cl.: B60K 1/04, H01M 50/209, H01M 50/249

(54) **VEHICLE REAR STRUCTURE**

(30) Priority: 26.03.2025 JP 2025052185
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); FUJIWARA, Nobuyoshi, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

Reinforcing members and downward projecting portions are provided on a lower case of a storage battery pack. Each reinforcing member extends in a vehicle front-rear direction between storage battery modules arranged in a vehicle width direction. Each downward projecting portion is disposed between the reinforcing members adjacent to each other in the vehicle width direction to face a safety valve provided for each storage battery cell, and projects downward in a vehicle. The downward projecting portion is provided along the vehicle front-rear direction for each storage battery module, and communicates with the outside at the rear end of the storage battery pack. Therefore, exhaust smoke released from the safety valve can be discharged out of the vehicle through the downward projecting portion. The downward projecting portion that constitutes a smoke exhaust channel is protected against collision loads input along the vehicle front-rear direction and the vehicle width direction.

## Description

### BACKGROUND OF THE INVENTION

### 1. Field of the Invention

The present invention relates to a vehicle rear structure.

### 2. Description of Related Art

Japanese Unexamined Patent Application Publication No. 2019-135687 (JP 2019-135687 A) discloses a technology related to a vehicle including a power storage module. In this prior art, the power storage module includes a plurality of power storage cells, and each power storage cell includes, at its upper end, a safety valve that releases gas when the gas pressure inside the power storage cell exceeds a predetermined value. In addition, the power storage module includes, at its upper end, a smoke exhaust duct that communicates with the outside of the vehicle, and a plurality of safety valves is covered by this smoke exhaust duct. Therefore, the gas (exhaust smoke) released through the safety valve is discharged out of the vehicle through this smoke exhaust duct.

### SUMMARY OF THE INVENTION

When a plurality of power storage modules is housed in a battery case, it is necessary to provide a smoke exhaust channel inside the battery case. Therefore, the shape of the battery case needs to be devised.

In view of the above fact, an object of the present invention is to provide a vehicle rear structure including a battery case that includes a smoke exhaust channel at the bottom and protects the smoke exhaust channel.

A vehicle rear structure according to a first aspect includes: a battery case including a lower case that defines a housing portion in which a plurality of battery modules each disposed along a vehicle front-rear direction is arranged along a vehicle width direction; longitudinal frames that are each provided on a lower wall portion of the lower case and each extend along the vehicle front-rear direction between the battery modules arranged along the vehicle width direction; and downward projecting portions that are each provided on the lower wall portion of the lower case between the longitudinal frames adjacent to each other in the vehicle width direction, each project downward in a vehicle at a position where each of the downward projecting portions faces safety valves provided on a plurality of battery cells constituting each of the battery modules and configured to release pressure inside the battery cells, and are each configured to communicate with an outside of the vehicle. Each of the downward projecting portions is provided along the vehicle front-rear direction for a corresponding one of the battery modules, and is configured to communicate with the outside at a rear end side of the battery case.

In the vehicle rear structure according to the first aspect, the battery case includes the lower case that defines the housing portion in which the battery modules each disposed along the vehicle front-rear direction is arranged along the vehicle width direction. The longitudinal frames and the downward projecting portions are provided on the lower wall portion of the lower case. The longitudinal frame extends along the vehicle front-rear direction between the battery modules arranged along the vehicle width direction. The downward projecting portion is provided between the longitudinal frames adjacent to each other in the vehicle width direction, is formed at the position where the downward projecting portion faces the safety valve that is provided for each of the storage battery cells constituting the battery module and can release the pressure inside the battery cell, and projects downward in the vehicle.

The downward projecting portion is provided along the vehicle front-rear direction for each battery module, and can communicate with the outside at the rear end side of the battery case. That is, in the present aspect, the inside of the downward projecting portion is a smoke exhaust channel, and exhaust smoke released (ejected) from the safety valve can be discharged out of the vehicle through the downward projecting portion.

In the present aspect, the downward projecting portion is provided between the longitudinal frames adjacent to each other in the vehicle width direction. Since the longitudinal frames extend along the vehicle front-rear direction on the lower wall portion of the lower case, it is possible to improve the rigidity of the lower case against a collision load input along the vehicle front-rear direction. Since the downward projecting portion is provided between the longitudinal frames adjacent to each other in the vehicle width direction, it is possible to protect the downward projecting portion against a collision load input along the vehicle width direction. As a result, in the present aspect, it is possible to protect the downward projecting portion that constitutes the smoke exhaust channel against the collision loads input along the vehicle front-rear direction and the vehicle width direction.

In a vehicle rear structure according to a second aspect, in the vehicle rear structure according to the first aspect, a width dimension of each of the downward projecting portions in the vehicle width direction decreases toward a lower side of the vehicle, and the width dimension at a lowermost end of each of the downward projecting portions is equal to or larger than an outer dimension of each of the safety valves in the vehicle width direction.

In the vehicle rear structure according to the second aspect, the width dimension of the downward projecting portion in the vehicle width direction decreases toward the lower side of the vehicle. Therefore, the width dimension at the lowermost end of the downward projecting portion is smallest, but the width dimension at the lowermost end of the downward projecting portion is equal to or larger than the outer dimension of the safety valve along the vehicle width direction.

Since the downward projecting portion is positioned to face the safety valve, the width dimension at the lowermost end of the downward projecting portion is set equal to or larger than the outer dimension of the safety valve. Since the width dimension of the downward projecting portion is larger than the outer dimension of the safety valve, when exhaust smoke is ejected from the safety valve, the impact acting on the downward projecting portion can be reduced and the exhaust smoke can be reliably guided into the downward projecting portion.

As described above, the vehicle rear structure according to the present invention can include the battery case that includes the smoke exhaust channel at the bottom and protects the smoke exhaust channel.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic plan view showing a vehicle rear structure according to an embodiment;
FIG. 2 is a schematic perspective view showing a storage battery pack provided in the vehicle rear structure according to the embodiment;
FIG. 3 is a schematic sectional view of the vehicle rear structure in FIG. 1 taken along a vehicle front-rear direction;
FIG. 4 is a schematic sectional view of the vehicle rear structure in FIG. 1 taken along a vehicle width direction;
FIG. 5 is a schematic sectional view of the vehicle rear structure in FIG. 1 taken along line A-A; and
FIG. 6 is a partially enlarged sectional view showing part of FIG. 4.

### DETAILED DESCRIPTION OF EMBODIMENTS

Hereinafter, a vehicle rear structure according to an embodiment of the present invention will be described with reference to the drawings. The same or similar signs denote identical or corresponding members in the drawings, and repetitive description will be omitted. When a plurality of identical or corresponding members is included in the drawing, some of them may be denoted with signs for clarity of the drawing. Arrow FR shown in the drawings as appropriate indicates a front side in a vehicle front-rear direction, and arrow UP indicates an upper side in a vehicle up-down direction. Arrow RH indicates a right side in a vehicle width direction, and indicates an outer side in the vehicle width direction in the present embodiment. Hereinafter, the terms "front," "rear," "upper," "lower," "left," and "right" refer to front and rear in the vehicle front-rear direction, upper and lower in the vehicle up-down direction, and left and right in the vehicle right-left direction (vehicle width direction), respectively, unless otherwise specified.

### Configuration of Vehicle Rear Structure

First, the configuration of the vehicle rear structure according to the present embodiment will be described.

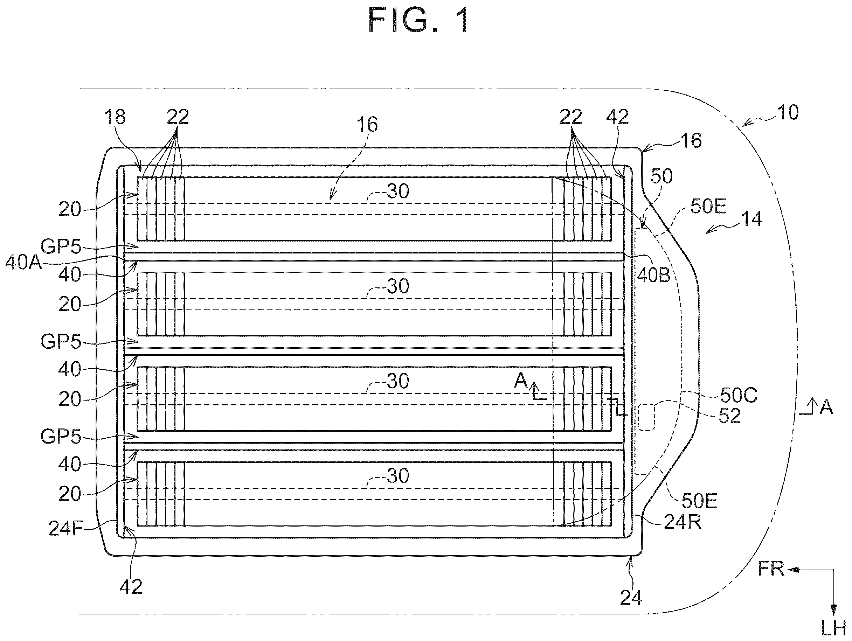

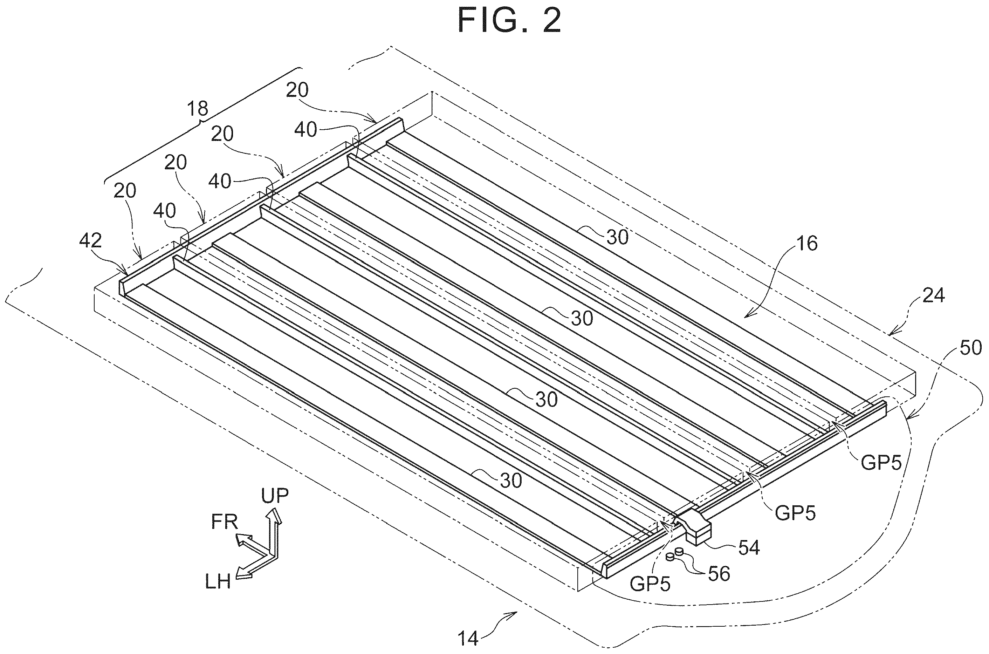

FIG. 1 is a schematic plan view partially showing a vehicle 10 including a vehicle rear structure 14 according to the present embodiment. FIG. 2 is a schematic perspective view showing a storage battery pack (battery case) 18 mounted on the vehicle 10.

As shown in FIG. 1, the storage battery pack 18 mounted on the vehicle 10 includes a plurality of (four in the present embodiment) storage battery modules (battery modules) 20 as also shown in FIG. 2. The storage battery modules 20 are arranged in the vehicle width direction. A clearance GP5 is defined between the storage battery modules 20 adjacent to each other in the vehicle width direction. Since there are four storage battery modules 20 in the present embodiment, three clearances GP5 are defined between the storage battery modules 20.

As shown in FIG. 1, each storage battery module 20 includes a plurality of storage battery cells 22. The storage battery cells 22 are arranged in the storage battery module 20 in the vehicle front-rear direction. That is, in the storage battery pack 18, the storage battery modules 20 each including the storage battery cells 22 arranged in the vehicle front-rear direction are arranged in the vehicle width direction.

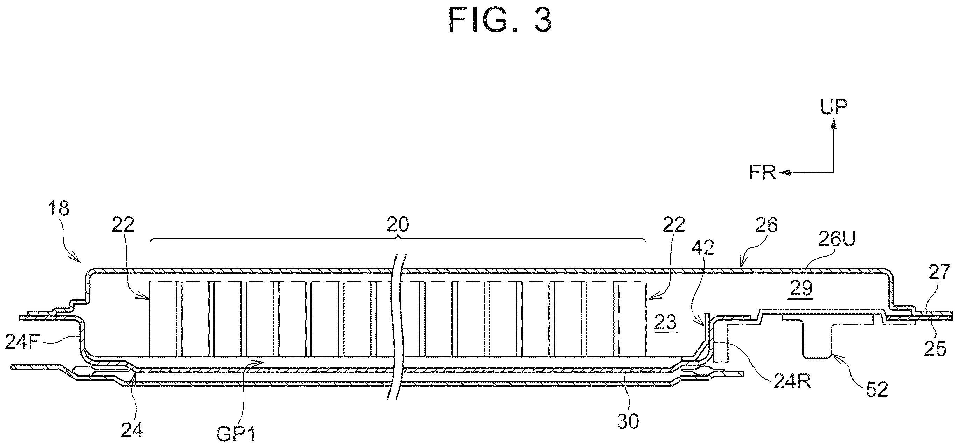

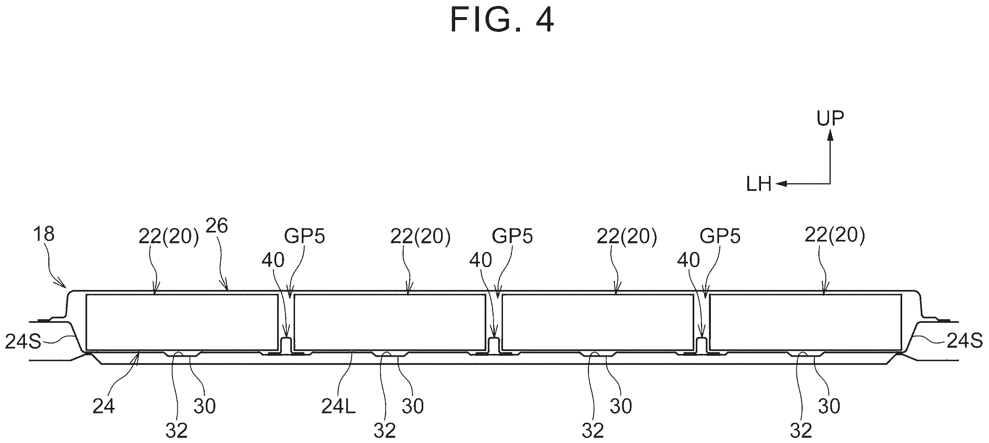

FIG. 3 is a sectional view of the vehicle rear structure 14 in FIG. 1 taken along the vehicle front-rear direction. FIG. 4 is a sectional view of the vehicle rear structure 14 in FIG. 1 taken along the vehicle width direction. As shown in FIGS. 3 and 4, the storage battery pack 18 includes a lower case 24 and an upper cover 26. In FIGS. 1 and 2, the upper cover 26 is not shown.

As shown in FIGS. 3 and 4, the lower case 24 is a member including a box-shaped housing portion 23 that can house the storage battery modules 20. The lower case 24 includes a lower plate (lower wall portion) 24L, a front plate 24F, a rear plate 24R, and a pair of right and left side plates 24S. The lower plate 24L is a plate-shaped portion that supports the storage battery modules 20 from the bottom. The front plate 24F and the rear plate 24R are plate-shaped portions that stand upright from the front end and the rear end of the lower plate 24L, respectively. The side plates 24S are plate-shaped portions that stand upright from both sides of the lower plate 24L in the vehicle width direction. The upper side of the lower case 24 is open, and a flange portion 25 projects from the peripheral edge of the lower case 24 to the outside of the housing portion 23.

The upper cover 26 is a lid-shaped member that closes the upper side of the lower case 24, includes the housing portion 23 in combination with the lower case 24, and has the same configuration as the lower case 24. A flange portion 27 projects from the peripheral edge of the upper cover 26 to the outside of the housing portion 23. The flange portion 27 can be mated with and joined to the flange portion 25 formed on the lower case 24.

As shown in FIG. 3, at the rear end of the lower case 24, the area of the flange portion 25 is larger than the area of the flange portion 27 of the upper cover 26, and a space 29 that communicates with the housing portion 23 is provided between an upper plate 26U of the upper cover 26 and the flange portion 25 of the lower case 24.

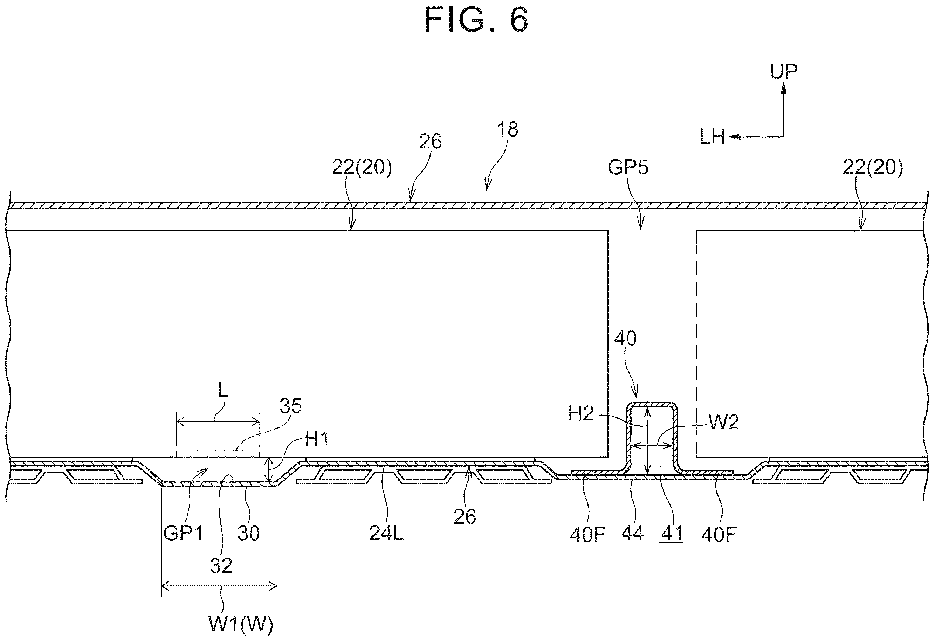

FIG. 6 is a partially enlarged sectional view showing part of FIG. 4. As shown in FIG. 6, a safety valve 35 is provided on the lower side of each storage battery cell 22 at the center of the storage battery cell 22 in the longitudinal direction (vehicle width direction). Through the safety valve 35, gas is released when the gas pressure inside the storage battery cell 22 exceeds a predetermined value.

As shown in FIGS. 4 and 6, a plurality of downward projecting portions 30 (as many as the storage battery modules 20) is provided on the lower plate 24L of the lower case 24 to project downward in the vehicle. That is, at the downward projecting portion 30, the lower case 24 is spaced away from the lower surface of the storage battery cell 22 to define a clearance GP1.

Each downward projecting portion 30 is formed for the corresponding storage battery module 20 to extend in the vehicle front-rear direction, that is, in the direction in which the storage battery cells 22 are arranged. The length of each downward projecting portion 30 in the vehicle front-rear direction is larger than the length of the storage battery module 20 in the vehicle front-rear direction. In FIG. 3, each downward projecting portion 30 extends continuously from a position near the front plate 24F to a position near the rear plate 24R in the vehicle front-rear direction. As shown in FIGS. 4 and 6, each downward projecting portion 30 projects downward at the center position of the corresponding storage battery module 20 in the vehicle width direction. That is, the downward projecting portion 30 faces the safety valve 35.

As shown in FIG. 6, the sectional shape of the downward projecting portion 30 taken along the vehicle width direction is a flat trapezoidal shape with the upper base longer than the lower base, and a height dimension H1 of the trapezoidal shape is smaller than a width dimension W (dimension in the vehicle width direction) of the downward projecting portion 30. The width dimension of the downward projecting portion 30 decreases toward the lower side of the vehicle. A width dimension W1 at the lowermost end of the downward projecting portion 30 is larger than an outer dimension L of the safety valve 35 along the vehicle width direction.

Each downward projecting portion 30 is provided along the vehicle front-rear direction for the corresponding storage battery module 20, and can communicate with the outside at the rear end of the storage battery pack 18. That is, in the present embodiment, the inside of the downward projecting portion 30 is part of a smoke exhaust channel 32, and exhaust smoke released (ejected) from the safety valve 35 can be discharged out of the vehicle through the downward projecting portion 30.

Since the clearance GP1 defined below the lower surface of the storage battery cell 22 by the downward projecting portion 30 extends in the vehicle front-rear direction, the clearance GP1 constitutes the smoke exhaust channel 32. When gas containing smoke (hereinafter, this gas will be referred to simply as "smoke") is generated in any storage battery cell 22 for some reason, the smoke is discharged from the safety valve 35 provided on the storage battery cell 22. Therefore, the smoke generated in the storage battery cell 22 flows into the clearance GP1 defined by the downward projecting portion 30.

As shown in FIG. 1, the storage battery modules 20 are arranged in the vehicle width direction, and the clearance GP5 is defined between the storage battery modules 20 adjacent to each other in the vehicle width direction. A reinforcing member (longitudinal frame) 40 is disposed in each clearance GP5. Since the clearance GP5 is provided between the storage battery modules 20 adjacent to each other in the vehicle width direction, the downward projecting portion 30 is disposed between the reinforcing members 40 adjacent to each other in the vehicle width direction.

As shown in FIG. 6, the sectional shape of the reinforcing member 40 taken along the vehicle width direction is a substantial hat sectional shape that is open downward. As shown in FIG. 1, each reinforcing member 40 has a length at which the reinforcing member 40 reaches positions near the front plate 24F and the rear plate 24R of the lower case 24. A front end 40A and a rear end 40B of each reinforcing member 40 are joined to the front plate 24F and the rear plate 24R of the lower case 24 via joining members 42, respectively. Thus, the reinforcing members 40 reinforce the storage battery pack 18.

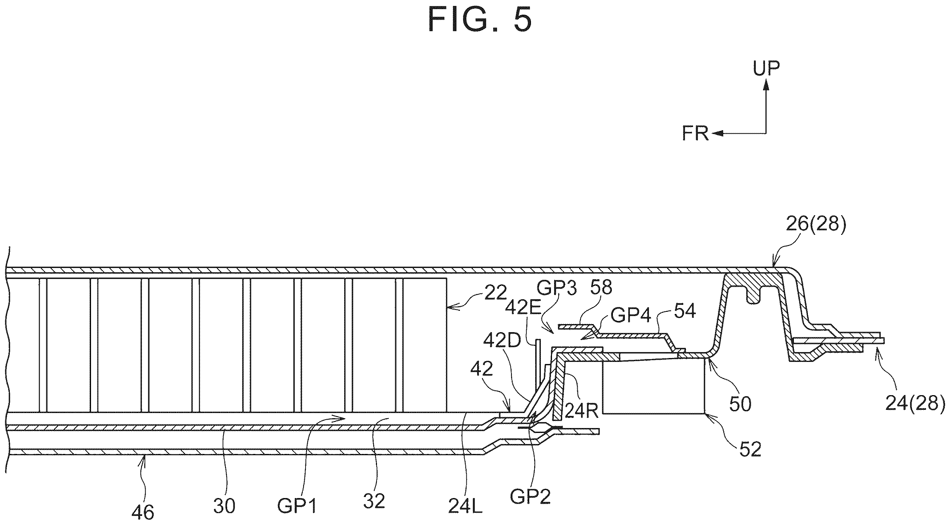

As shown in FIG. 5, the joining member 42 includes a first spacing portion 42D between a joining surface 42A in surface contact with the lower plate 24L of the lower case 24 and a joining surface 42B in surface contact with the rear plate 24R of the lower case 24. The first spacing portion 42D is formed obliquely when viewed in a cross section taken in the vehicle front-rear direction, and a clearance GP2 is defined between the first spacing portion 42D and the lower case 24. The clearance GP2 is continuous in the vehicle width direction and communicates with the clearance GP1 between the lower surface of the storage battery cell 22 and the downward projecting portion 30. That is, the clearance GP2 constitutes the smoke exhaust channel 32.

As shown in FIG. 6, a cell base 44 is formed on the lower plate 24L of the lower case 24 at a position where the reinforcing member 40 is provided. The cell base 44 is formed in a downward projecting shape on the lower plate 24L of the lower case 24 at a position corresponding to the reinforcing member 40. A flange plate 40F of the reinforcing member 40 is joined to the cell base 44, and the open portion on the lower side of the reinforcing member 40 is closed to form a closed sectional portion 41. The reinforcing member 40 has a height dimension H2 larger than a width dimension W2.

The front end 40A and the rear end 40B of the reinforcing member 40 shown in FIG. 1 are open and communicate with the clearances GP2 shown in FIG. 5. That is, the inside of the closed sectional portion 41 formed by the reinforcing member 40 and the cell base 44 communicates with the clearance GP2 shown in FIG. 5 and constitutes the smoke exhaust channel 32.

As shown in FIG. 5, a connector block 50 is provided on the rear end side of the lower case 24. As shown in FIG. 1, the front side of the connector block 50 (side facing the front of the vehicle) is linear along the vehicle width direction. The rear side of the connector block 50 (side facing the rear of the vehicle) is curved such that the center in the vehicle width direction projects rearward in the vehicle. That is, a central portion 50C of the connector block 50 in the vehicle width direction is longer in the vehicle front-rear direction than both end portions 50E in the vehicle width direction.

As shown in FIG. 5, a smoke exhaust valve 52 is provided on the outer side of the connector block 50 in the vehicle width direction. A cover plate 54 that constitutes the smoke exhaust channel 32 between the cover plate 54 and the connector block 50 from the storage battery pack 18 to the smoke exhaust valve 52 is attached to the connector block 50.

The cover plate 54 includes an upward projecting portion 58. The upward projecting portion 58 has a shape in which the center in the vehicle width direction on the side facing the front of the vehicle is curved to project upward. With the upward projecting portion 58, a clearance GP4 is defined between the cover plate 54 and the connector block 50. The clearance GP4 allows smoke to move in the vehicle front-rear direction and constitutes the smoke exhaust channel 32.

The joining member 42 joined to the rear plate 24R of the lower case 24 includes a second spacing portion 42E. The second spacing portion 42E is formed at a position corresponding to the upward projecting portion 58 in the vehicle width direction. The second spacing portion 42E is spaced away from the rear plate 24R of the lower case 24 and is continuous with the first spacing portion 42D. A clearance GP3 is defined between the second spacing portion 42E and the rear plate 24R of the lower case 24.

Therefore, the smoke exhaust channel 32 inside the storage battery pack 18 is formed to be continuous from the clearance GP1 between the lower surface of the storage battery cell 22 and the downward projecting portion 30 to the smoke exhaust valve 52 via the clearance GP2 between the first spacing portion 42D and the rear plate 24R of the lower case 24, the clearance GP3 between the second spacing portion 42E and the rear plate 24R of the lower case 24, and the clearance GP4 between the cover plate 54 and the lower case 24.

The smoke exhaust valve 52 is opened when the internal pressure of the smoke exhaust channel 32 is higher than the air pressure outside the smoke exhaust channel 32 by a predetermined value or more. That is, when smoke flows into the smoke exhaust channel 32 and the internal pressure increases by the predetermined value or more, the smoke exhaust valve 52 is opened and the gas inside the smoke exhaust channel 32 is discharged to the outside.

### Functions and Effects of Vehicle Rear Structure

Next, the functions and effects of the vehicle rear structure according to the present embodiment will be described.

In the vehicle 10 to which the vehicle rear structure 14 according to the present embodiment shown in FIG. 1 is applied, the storage battery module 20 is constituted by the storage battery cells 22. The storage battery cells 22 are arranged in the vehicle front-rear direction in each storage battery module 20, and the storage battery modules 20 are arranged in the vehicle width direction. Thus, it is possible to efficiently arrange the storage battery cells 22 in the vehicle front-rear direction and the vehicle width direction. In particular, since the storage battery cells 22 are arranged in the vehicle front-rear direction in each storage battery module 20, the number of storage battery cells 22 per row can be increased compared with a configuration in which the storage battery cells 22 are arranged in the vehicle width direction.

In each storage battery cell 22 shown in FIG. 5, smoke is not generated during normal operation. When smoke is generated for some reason, the smoke is discharged from the center position on the lower surface of the storage battery cell 22 in the vehicle width direction. The smoke flows into the clearance GP1 provided between the downward projecting portion 30 of the lower case 24 of the storage battery pack 18 and the lower surface of the storage battery cell 22. The smoke further flows to the smoke exhaust valve 52 through the clearance GP2 and the clearance GP3 provided near the rear plate 24R of the lower case 24 and the clearance GP4 provided between the cover plate 54 and the connector block 50 provided at the rear end of the lower case 24. The clearance GP1 to the clearance GP4 constitute the smoke exhaust channel 32. When the internal pressure of the smoke exhaust channel 32 is higher than the external pressure, the smoke is discharged from the smoke exhaust valve 52.

In the present embodiment, as shown in FIGS. 4 and 6, the reinforcing member 40 and the downward projecting portion 30 are provided on the lower plate 24L of the lower case 24. The reinforcing member 40 extends along the vehicle front-rear direction between the storage battery modules 20 arranged along the vehicle width direction.

The downward projecting portion 30 is provided between the reinforcing members 40 adjacent to each other in the vehicle width direction, is formed at a position where the downward projecting portion 30 faces the safety valve 35 that is provided for each of the storage battery cells 22 constituting the storage battery module 20 and can release the pressure inside the storage battery cell 22, and projects downward in the vehicle.

Each downward projecting portion 30 is provided along the vehicle front-rear direction for the corresponding storage battery module 20, and can communicate with the outside at the rear end of the storage battery pack 18. That is, in the present embodiment, the inside of the downward projecting portion 30 is the smoke exhaust channel 32, and exhaust smoke released (ejected) from the safety valve 35 can be discharged out of the vehicle through the downward projecting portion 30.

In the present embodiment, the downward projecting portion 30 is provided between the reinforcing members 40. Since the reinforcing members 40 extend along the vehicle front-rear direction on the lower plate 24L of the lower case 24, it is possible to improve the rigidity of the lower case 24 against a collision load input along the vehicle front-rear direction. Since the downward projecting portion 30 is provided between the reinforcing members 40 adjacent to each other in the vehicle width direction, it is possible to protect the downward projecting portion 30 against a collision load input along the vehicle width direction. As a result, in the present embodiment, it is possible to protect the downward projecting portion 30 that constitutes the smoke exhaust channel 32 against the collision loads input along the vehicle front-rear direction and the vehicle width direction.

As described above, in the present embodiment, it is possible to provide the storage battery pack 18 that houses the storage battery modules 20, includes the smoke exhaust channel 32 at the bottom, and protects the smoke exhaust channel 32.

In particular, the reinforcing member 40 has the height dimension H2 larger than the width dimension W2. Since the reinforcing member 40 is formed in the clearance GP5 provided between the storage battery modules 20 adjacent to each other in the vehicle width direction, the width dimension W2 is set in advance. Since the height dimension H2 of the reinforcing member 40 is set larger than the width dimension W2, it is possible to improve the second moment of area and suppress deformation in the reinforcing member 40 compared with the case where the height dimension H2 is set equal to the width dimension W2. Thus, it is possible to further improve the rigidity of the lower case 24 against the collision load input along the vehicle front-rear direction, and to protect the smoke exhaust channel 32.

In the present embodiment, the storage battery pack 18 includes the downward projecting portion 30 on the lower plate 24L of the lower case 24. Thus, the rigidity of the lower plate 24L of the lower case 24 can be improved.

In the present embodiment, the downward projecting portion 30 is provided on the lower plate 24L of the lower case 24 to project downward in the vehicle, thereby providing the clearance GP1 between the lower surface of the storage battery cell 22 and the lower plate 24L of the lower case 24. In the present embodiment, when exhaust smoke is ejected from the safety valve 35 of the storage battery cell 22, the exhaust smoke is ejected into the downward projecting portion 30. Therefore, it is possible to reduce the impact on the storage battery cell 22 that occurs when the exhaust smoke is ejected from the safety valve 35 compared with the case where the downward projecting portion 30 is not formed on the lower plate 24L of the lower case 24.

The sectional shape of the downward projecting portion 30 taken along the vehicle width direction is the flat trapezoidal shape with the upper base longer than the lower base, and the width dimension W of the downward projecting portion 30 decreases toward the lower side of the vehicle. The width dimension W1 at the lowermost end of the downward projecting portion 30 is larger than the outer dimension L of the safety valve 35.

Since the downward projecting portion 30 is positioned to face the safety valve 35, the width dimension W1 at the lowermost end of the downward projecting portion 30 is set equal to or larger than the outer dimension L of the safety valve 35. Since the width dimension W1 of the downward projecting portion 30 is larger than the outer dimension L of the safety valve 35, when exhaust smoke is ejected from the safety valve 35, the impact acting on the downward projecting portion 30 can be reduced and the exhaust smoke can be reliably guided into the downward projecting portion 30.

Although the embodiment of the present invention has been described above, the present invention is not limited to such an embodiment. The embodiment may be combined with various modifications as appropriate. The present invention may be carried out in various forms without departing from the spirit of the present invention.

## Claims

1. A vehicle rear structure comprising:
a battery case including a lower case that defines a housing portion in which a plurality of battery modules each disposed along a vehicle front-rear direction is arranged along a vehicle width direction;
longitudinal frames that are each provided on a lower wall portion of the lower case and each extend along the vehicle front-rear direction between the battery modules arranged along the vehicle width direction; and
downward projecting portions that are each provided on the lower wall portion of the lower case between the longitudinal frames adjacent to each other in the vehicle width direction, each project downward in a vehicle at a position where each of the downward projecting portions faces safety valves provided on a plurality of battery cells constituting each of the battery modules and configured to release pressure inside the battery cells, and are each configured to communicate with an outside of the vehicle, wherein
each of the downward projecting portions is provided along the vehicle front-rear direction for a corresponding one of the battery modules, and is configured to communicate with the outside at a rear end side of the battery case.

2. The vehicle rear structure according to claim 1, wherein a width dimension of each of the downward projecting portions in the vehicle width direction decreases toward a lower side of the vehicle, and the width dimension at a lowermost end of each of the downward projecting portions is equal to or larger than an outer dimension of each of the safety valves in the vehicle width direction.
